# EUROPÄISCHE PATENTSCHRIFT

(11) **EP 2 445 698 B1**
(45) Veröffentlichungstag und Bekanntmachung des Hinweises auf die Patenterteilung: **24.04.2013**
(21) Anmeldenummer: 10739489.2
(22) Anmeldetag: 22.06.2010
(51) Int. Cl.: B29C 49/18

(54) **VERFAHREN ZUR HERSTELLUNG EINES KUNSTSTOFFARTIKELS SOWIE BLASFORMWERKZEUG**
METHOD FOR PRODUCING A PLASTIC ARTICLE AND BLOW MOLDING TOOL
PROCÉDÉ POUR PRODUIRE UN ARTICLE EN MATIÈRE PLASTIQUE ET OUTIL DE MOULAGE PAR SOUFFLAGE

(30) Priorität: 24.06.2009 DE 102009030492
(43) Veröffentlichungstag der Anmeldung: 02.05.2012
(73) Patentinhaber: Kautex Maschinenbau GmbH, 53229 Bonn (DE)
(72) Erfinder: HEIM, Volker, 53347 Alfter (DE); LICHTENAUER, Andreas, 53225 Bonn (DE); MOITZHEIM, Jürgen, 53639 Königswinter (DE); WALBROEL, Stefan, 53757 Sankt Augustin (DE)
(74) Vertreter: Kierdorf, Theodor
(86) Internationale Anmeldenummer: PCT/EP2010/003752
(87) Internationale Veröffentlichungsnummer: WO 2010/149336

(56) Entgegenhaltungen:
- EP-A1- 0 556 552
- WO-A2-2006/064057
- DE-A1- 1 801 966
- DE-A1- 2 933 212
- JP-A- 56 051 333
- JP-A- 2006 015 744
- US-A- 3 300 556
- DATABASE WPI Week 199950 Thomson Scientific, London, GB; AN 1999-584827 XP002612713, & JP 11 254511 A (CANON KK) 21. September 1999 (1999-09-21)

## Beschreibung

Insbesondere bei der Herstellung großer Kunststoffbehälter durch Extrusionsblasformen ist es häufig wünschenswert, in den fertigzustellenden Behälter Einbauteile einzubringen. Beispielsweise Kraftstoffbehälter für Kraftfahrzeuge aus thermoplastischem Kunststoff sind häufig mit funktionalen Einbauten bzw. Einbauteilen versehen, die entweder nach der Herstellung des Behälters manuell durch eine oder mehrere in diesem vorgesehenen Revisionsöffnungen eingebracht werden oder die während der Ausformung des Behälters durch Extrusionsblasformen mit umblasen werden. Hierzu ist es bekannt, die in den Behälter einzubringenden Einbauteile auf einem Dom/Träger zu platzieren und zwischen den geöffneten Hälften eines Blasformwerkzeugs so anzuordnen, dass der über dem Blasformwerkzeug extrudrierte Vorformlingschlauch aus thermoplastischem Material über den Träger und die auf diesem angeordneten Bauteile extrudiert wird. Dabei wird der Schlauch über den Funktionsbauteilträger und die Funktionsbauteile gestülpt. Sodann schließen sich die Formhälften des Blasformwerkzeugs um den Träger und die auf diesem angeordneten Funktionsbauteile. Dabei kann der Funktionsbauteilträger mit der Wandung des späteren Behälters verschweißt werden. In einem weiteren Arbeitsgang wird der schlauchförmige Vorformling innerhalb des Blasformwerkzeugs aufgeweitet. Ein solches Verfahren ist beispielsweise aus der DE 602 18 237 T2 bekannt. Das bekannte Umblasen von Einbauteilen nach dem Flaschenschiffprinzip wird u. a. auch dann angewendet, wenn die in den Behälter einzubringenden Einbauteile größer als die in diesem vorzusehenden Revisionsöffnungen sind.

Insbesondere bei Kraftstoffbehältern aus thermoplastischem Kunststoff ist es problematisch, dass die hierfür verwendeten Kunststoffe, in der Regel HDPE, nicht für Kohlenwasserstoffe diffusionsdicht sind. Deswegen werden moderne Kraftstoffbehälter aus thermoplastischem Kunststoff aus Co-Extrudaten mit Barriereschichten für Kohlenwasserstoffe hergestellt. Hiermit ist es möglich, weitestgehend die Dichtigkeit des Systems Kraftstoffbehälter zu gewährleisten, wobei jedoch die Barriereschicht durch nachträglich anzubringende Öffnungen in der Behälterwand verletzt/unterbrochen wird, so dass im Bereich von Auskreisungen und/oder Wartungsöffnungen in der Behälterwand potentielle Leckagestellen für flüchtige Kohlenwasserstoffe geschaffen werden.

In jüngster Zeit gehen daher alle Bemühungen dahin, möglichst alle Einbauteile bereits während der Herstellung des Kraftstoffbehälters in diesen einzubringen, um die Anzahl der erforderlichen Öffnungen in der Behälterwandung so gering wie möglich zu halten.

Das sogenannte Umblasen von Einbauteilen wird zwar dieser Problematik hinsichtlich der Größe der benötigten Öffnungen in der Behälterwandung gerecht, die Befestigung einiger der Einbauteile wie beispielsweise Ventile oder dergleichen erfordert dennoch unter Umständen eine Verletzung der Behälterwandung im Sinne eines Durchstoßens oder Durchdringens, so dass die Anzahl der benötigten Öffnungen hierdurch nicht deutlich reduziert wird.

In der EP 1 110 697 B1 wird deshalb ein Verfahren vorgeschlagen, bei dem das aus dem Extrusionskopf austretende Extrudat mit einem geschlossenen Querschnitt an zwei diametral gegenüberliegenden Seiten aufgetrennt wird, so dass zwei bahnförmige Vorformlinge erhalten werden, die mit Hilfe einer Führungsrichtung geführt und vor ihrer Formung in gegenseitigem Abstand gehalten werden, während man zwischen die beiden ein Zubehör einführt, welches dazu bestimmt ist, in den späteren Behälter aufgenommen zu werden.

Dieses Verfahren ist insbesondere hinsichtlich des zur Verfügung stehenden Platzes zur Handhabung der Einbauteile verhältnismäßig günstig, erfordert jedoch einen hohen apparativen Aufwand zur Führung der noch warmplastischen lappen- oder bahnförmigen Extrudate. Darüber hinaus ist die Anwendung dieses Verfahrens auf eine räumlich feste Anordnung des Extrusionskopfs zu dem Blasformwerkzeug beschränkt.

Der Erfindung liegt die Aufgabe zugrunde, zu den vorgenannten Verfahren eine Alternative bereitzustellen, die insbesondere die bekannten Nachteile nicht aufweist. Das erfindungsgemäße Verfahren soll auch eine Entkoppelung zwischen Blasformwerkzeug und Extruder in dem Sinne ermöglichen, dass die räumliche Anordnung der Blasformwerkzeuge nicht notwendigerweise unter dem Extruder sein muss.

Die Aufgabe wird zunächst durch ein Verfahren zur Herstellung eines Kunststoffartikels gelöst, welches folgende Verfahrensschritte umfasst:
Extrudieren eines etwa schlauchförmigen Vorformlings,
Aufteilen des Schmelzestroms innerhalb des Extrusionskopfs oder Auftrennen des aus dem Extrusionskopf austretenden oder bereits ausgetretenen Extrudats derart, dass ein Vorformling mit einem etwa C-förmigen Querschnitt erhalten wird und
Umformen des Vorformlings innerhalb eines Blasformwerkzeugs unter Anwendung von Differenzdruck zu einem Hohlkörper, wobei zunächst eine Aufweitung und teilweise Vorformung des Vorformlings bei teilweise geschlossenem Blasformwerkzeug erfolgt,
in einem weiteren Schritt zwischen die Teile des nicht vollständig geschlossenen Blasformwerkzeuges und durch die geöffnete Seite des Vorformlings wenigstens ein Einlegeteil oder Einbauteil in das Innere des teilweise vorgeformten Artikels eingebracht wird,
und in einem weiteren Schritt das Blasformwerkzeug vollständig geschlossen wird, wobei der Artikel unter Bildung einer wenigstens teilweise umlaufenden Quetschnaht vollständig ausgeformt wird.

Unter Blasformwerkzeug im Sinne der Erfindung ist ein Werkzeug zu verstehen, das wenigstens zwei Blasformhälften mit jeweils einer Kavität aufweist, die im vollständig geschlossenen Zustand ein Formnest für einen auszuformenden Artikel bilden. Die Blasformhälften können jeweils auf Formaufspannplatten angeordnet sein und einteilig oder mehrteilig ausgebildet sein. Diese können in bekannter Art und Weise Schieber zur Entformung von Hinterschneidungen oder dergleichen aufweisen. Im Rahmen der Erfindung kann das Blasformwerkzeug auch mehr als zwei relativ zueinander verfahrbare Werkzeugteile aufweisen, wobei der Einfachheit halber im Folgenden der Begriff "Blasformhälften" verwendet wird.

Das Verfahren gemäß der Erfindung hat insbesondere den Vorzug, dass bereits eine nahezu vollständige (teilweise) Ausformung des Vorformlings in einem ersten Schritt bei nicht vollständig geschlossenem Blasformwerkzeug erfolgt. Dadurch, dass der Schlauch einseitig geöffnet (geschlitzt) ist, lassen sich zwischen den nicht vollständig geschlossenen Blasformhälften mittels eines Manipulators ein oder mehrere Einlegteile oder Einbauteile in das Innere des zu fertigenden Behälters einbringen und dort befestigen, beispielsweise durch Verschweißen mit der noch warmplastischen Behälterwandung.

Das Verfahren gemäß der Erfindung sieht die Um- und Ausformung des Extrudats in der ersten Hitze, d. h. ohne weitere Erwärmung, vor, dabei ist nicht ausgeschlossen, dass das einzubringende Einbauteil und/oder die Behälterwandung im Bereich der Verschweißung des Einbauteils mit der Behälterwandung partiell zur Verbesserung der Schweißverbindung erwärmt wird.

Mit den Schiebern/Formvoreilern des Blasformwerkzeugs wird der Vorformling unter Bildung einer Vorkammer zunächst zwischen diesen Formvoreilern eingespannt. Der Vorformling wird sodann an die Kavitäten des Blasformwerkzeugs angelegt, wobei dessen Gestalt in dieser Stufe des Verfahrens noch nicht der endgültigen Gestalt des Artikels entspricht.

Bei einer zweckmäßigen Ausgestaltung des Verfahrens gemäß der Erfindung ist vorgesehen, dass die Schließbewegung des Blasformwerkzeugs zweistufig erfolgt, wobei in der ersten Stufe der Schließbewegung wenigstens ein ein- und ausfahrbarer, vorzugsweise zwei, die Kavitäten des Blasformwerkzeug jeweils umrahmender Schieber als Formvoreiler den Vorformling unter Bildung wenigstens einer Öffnung zwischen sich einspannt.

Zweckmäßigerweise erfolgt eine Aufweitung des Vorformlings in die Blasformhälften sowie das Einbringen des Einbauteils zwischen der ersten und der zweiten Stufe der Schließbewegung.

Obwohl im Folgenden von einem Einbauteil die Rede ist, ist die Erfindung so zu verstehen, dass selbstverständlich mehrere Einbauteile in den Artikel eingebracht werden können.

Auch können durch die seitliche Öffnung des Vorformlingschlauchs und durch die Öffnung zwischen den Blasformhälften andere Manipulationen innerhalb des zu fertigenden Artikels vorgenommen werden.

Das Verfahren gemäß der Erfindung kann sich auf die Herstellung eines Kraftstoffbehälters beziehen, die Erfindung ist allerdings so zu verstehen, dass jedweder Kunststoffhohlkörper mit dem Verfahren gemäß der Erfindung hergestellt werden kann.

Bei einer Variante des Verfahrens ist vorgesehen, dass der Vorformling mittels Blasluft aufgeweitet wird, wobei wenigstens ein Blasdorn in die von den Formvoreilern gebildete Öffnung eingebracht wird.

Anstelle einer Öffnung können auch mehrere Öffnungen vorgesehen sein, die jeweils auch für die Aufnahme eines Blasdorns vorgesehen sein können.

Zweckmäßigerweise erfolgt die Einbringung des Einbauteils durch die von den Formvoreilern gebildete Öffnung.

Bei einer bevorzugten Variante des Verfahrens gemäß der Erfindung wird der Vorformling mittels eines Greifers vom Extrusionskopf abgenommen und zwischen die geöffneten Hälften des Blasformwerkzeugs verbracht.

Dabei kann der Vorformling beispielsweise vor oder während des Einbringens zwischen die geöffneten Blasformhälften in Umfangsrichtung aufgeweitet oder teilweise gestreckt werden. Hierfür vorgesehene Greifer sind beispielsweise in der

DE 10 20 55 24 der Rechtsvorgängerin der Anmelderin beschrieben, auf die hier vollumfänglich, auch zum Zwecke der Offenbarung, Bezug genommen wird. Zweckmäßigerweise kann vorgesehen sein, den Vorformling an jeweils voneinander abliegenden Enden festzuhalten und in Umfangsrichtung aufzuweiten oder zu strecken.

Die Aufweitung des Vorformlings erfolgt nur in dem Maße, wie dies erforderlich ist, um eine Überlappung des Vorformlingschlauchs mit den Formvoreilern und/oder den Quetschkanten des Blasformwerkzeugs herzustellen.

Besonders zweckmäßig ist es, wenn das Einbauteil mittels eines vorzugsweise mehrachsigen Manipulators in den teilweise ausgeformten Vorformling eingebracht wird.

Bei einer zweckmäßigen Variante des Verfahrens gemäß der Erfindung ist vorgesehen, dass nach dem Einbringen des Einbauteils bzw. der Einbauteile in den teilweise ausgeformten Vorformling in die von den Formvoreilern gebildete Öffnung erneut ein Blasdorn eingebracht wird und der Vorformling erneut mit Blasluft beaufschlagt wird, um etwa entstehende Falten insbesondere in dem Bereich zwischen den Quetschkanten des Blasformwerkzeuges und den Formvoreilern zu entfernen.

Danach können die Blasformwerkzeuge gegeneinander geschlossen werden und der Kunststoffartikel kann fertiggeblasen werden.

Die der Erfindung zugrundeliegende Aufgabe wird weiterhin gelöst durch ein Blasformwerkzeug zur Herstellung eines Kunststoffartikels, insbesondere zur Durchführung des zuvor beschriebenen Verfahrens, wobei das Blasformwerkzeug wenigstens zwei ein Formnest bildende Blasformhälften umfasst, die eine Offnungs- und Schließbewegung relativ zueinander vollziehen, wobei wenigstens eine Blasformhälfte, vorzugsweise beide, mit wenigstens einem die jeweilige Kavität umrahmenden Schieber als Formvoreiler versehen ist, der mit wenigstens einer Ausnehmung zur Bildung einer Öffnung zur Aufnahme eines Blasdorns zur Hindurchführung eines Manipulators versehen ist.

Bei einer zweckmäßigen Ausgestaltung des Blasformwerkzeugs nach der Erfindung ist vorgesehen, dass dieses wenigstens ein Blasdorn umfasst, der einen umlaufenden Dichtkragen aufweist, welcher bei der Aufweitung des Vorformlings dichtend in Anlage mit den auf Anschlag gefahrenen Formvoreilern bringbar ist.

Zweckmäßigerweise sind die Formvoreiler aus der Trennebene der Blashälften ein- und ausfahrbar ausgebildet, beispielsweise hydraulisch.

Zur Vermeidung von zuviel Butzen (Flash) ist es sinnvoll, wenn die Formvoreiler der Kontur der Kavitäten angepasst sind. Dabei müssen die Formvoreiler nicht notwendigerweise jeweils aus einem einzelnen Schiebersegment bestehen, diese können vielmehr auch aus einer Vielzahl von in der Trennebene der Blasformhälften nebeneinander angeordneten Schiebersegmenten bestehen.

Bevorzugt ist wenigstens ein Formvoreiler temperierbar, insbesondere beheizbar ausgebildet, damit das Material der Vorformlinge innerhalb des von den Formvoreilern gebildeten Rahmens plastisch bleibt.

Bei einer weiteren zweckmäßigen Ausgestaltung des Blasformwerkzeugs gemäß der Erfindung kann vorgesehen sein, dass wenigstens ein Formvoreiler mit Unterdruck beaufschlagbaren Ansaugöffnungen zur Fixierung des Vorformlings versehen ist. Der Vorformling kann in diesem Bereich an den Formvoreilern mittels eines an die Formvoreiler angelegten Vakuums gehalten werden. Zweckmäßigerweise sind Ansaugöffnungen bzw. Vakuumbohrungen mit Abstand zueinander über den gesamten Umfang der Formvoreiler auf deren der Kavität zugekehrten Innenseite vorgesehen.

Die Erfindung wird nachstehend anhand eines in den Zeichnungen dargestellten Ausführungsbeispiels erläutert.

Es zeigen:
- Figur 1: eine perspektivische Ansicht eines Teils eines Extrusionskopfs mit dem aus diesem austretenden Vorformling,
- Figur 2: eine Schnittansicht entlang der Linien II-II in Figur 1,
- Figur 3: eine perspektivische Ansicht einer Einrichtung zum Blasformen von Kunststoffartikeln gemäß der Erfindung, die auch den Ablauf des erfindungsgemäßen Verfahrens veranschaulicht,

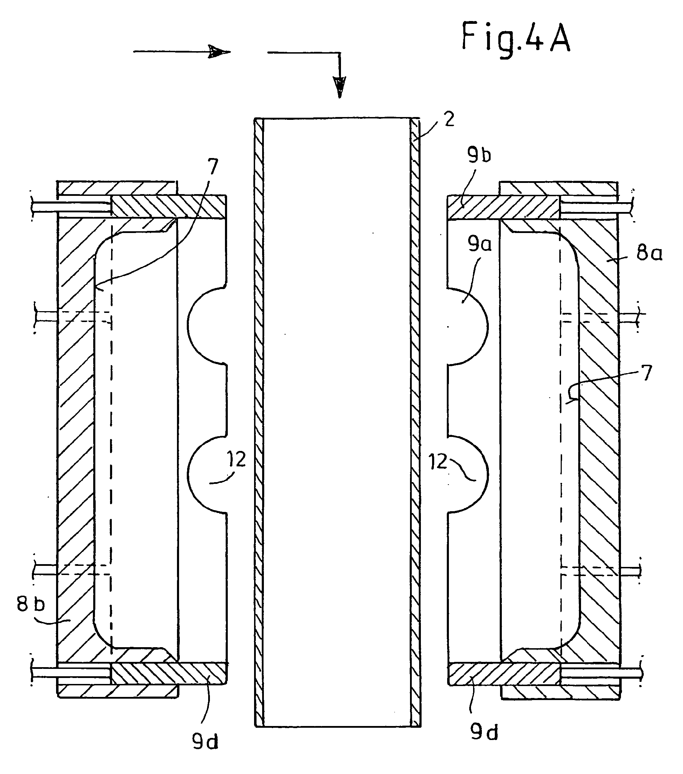

- Figur 4a: eine Schnittansicht durch das Blasformwerkzeug in Figur 3 und den zwischen den Blasformhälften platzierten Vorformling,

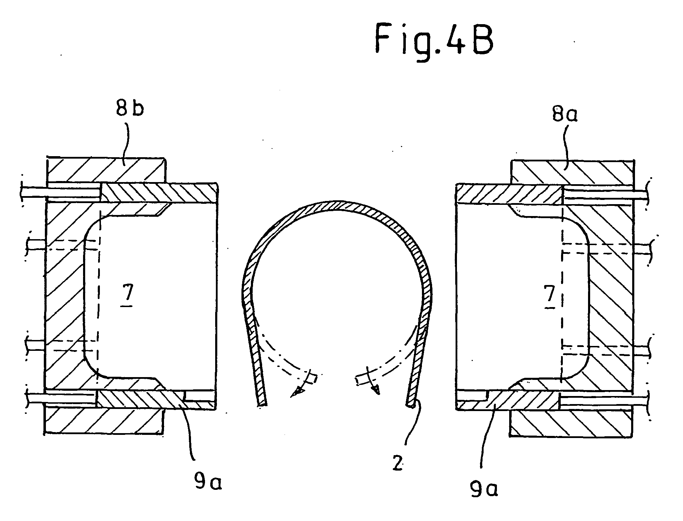

- Figur 4b: eine Draufsicht in Richtung auf den in Figur 4a dargestellten Pfeil,
- Figur 5a: einen Teilschnitt durch das Blasformwerkzeug mit geschlossenen Blasformhälften vor der Aufweitung des Vorformlings,
- Figur 5b: einen Schnitt entlang der Linien B-B in Figur 5a,
- Figur 5c: einen Schnitt entlang der Linien C-C in Figur 5a,
- Figur 5d: eine der Figur 5c entsprechende Ansicht mit eingeschossenem Blasdorn,
- Figur 5e: eine der Figur 5d entsprechende Ansicht, die das Einbringen des Einbauteils in den teilweise ausgeformten Artikel veranschaulicht,
- Figur 6a: das geöffnete Blasformwerkzeug mit zurückgezogenen Formvoreilern,
- Figur 6b: einen Teillängsschnitt durch das Blasformwerkzeug in dem in Figur 6a gezeigten Zustand,
- Figur 7a: einen Querschnitt durch das Blasformwerkzeug in geschlossenem Zustand und
- Figur 7b: einen Querschnitt durch das Blasformwerkzeug und den Artikel bei der Artikelentnahme.

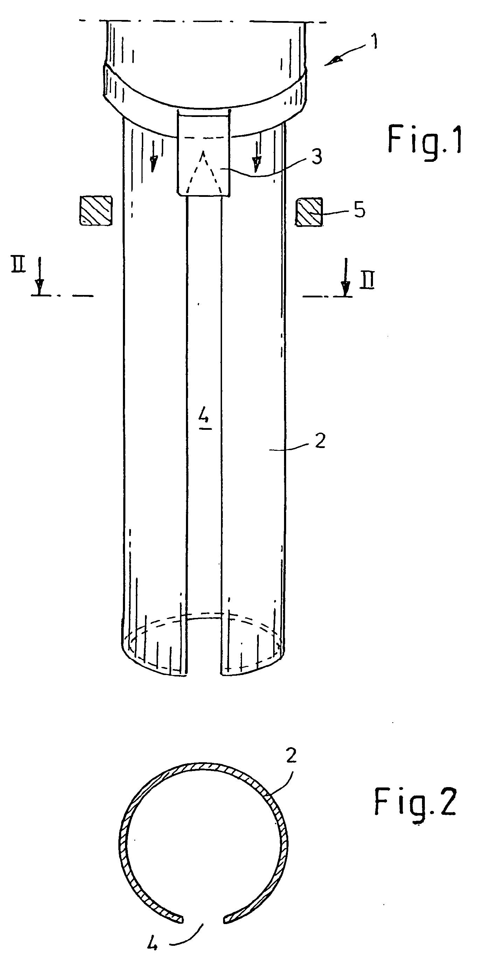

In Figur 1 ist zunächst einmal der Schritt des Extrudierens eines etwa schlauchförmigen Vorformlings nach Erfindung veranschaulicht. Aus dem mit 1 bezeichneten Extrusionskopf wird zunächst ein schlauchförmiger Vorformling aus thermoplastischem Kunststoff in schmelzeheißem Zustand ausgestoßen, und zwar in bekannter Art und Weise durch eine Ringspaltdüse des Extrusionskopfs 1. Die Extrusion kann kontinuierlich oder diskontinuierlich erfolgen. In dem dargestellten Ausführungsbeispiel wird der Vorformlingschlauch 2 an einer Seite der Länge nach mittels einer Trenneinrichtung 3 aufgetrennt, so dass dieser über seine gesamte Länge die in Figur 2 dargestellte Querschnittsform erhält, d. h. mit einem Längsschlitz 4 versehen ist. Als Trenneinrichtung kommen beispielsweise ein Heißmesser, eine bewegliche Klinge, ein Laser oder dergleichen in Betracht.

Das Auftrennen des Vorformlingschlauchs 2 kann wie in dem dargestellten Ausführungsbeispiel außerhalb des Extrusionskopfs nach und während des Austritts des Vorformlingschlauchs 2 aus dem Extrusionskopf 1 bzw. aus der nicht gezeigten Ringspaltdüse erfolgen. Alternativ kann ein Auftrennen des Vorformlingschlauchs 2 auch innerhalb des Extrusionskopfs 1 mit einem dort vorgesehenen Strömungsteiler erfolgen.

Schließlich kann weiterhin alternativ der Vorformlingschlauch 2 zunächst auf seine vollständige Länge ausgestoßen werden und anschließend mittels Greifer und Trenneinrichtung aufgetrennt werden.

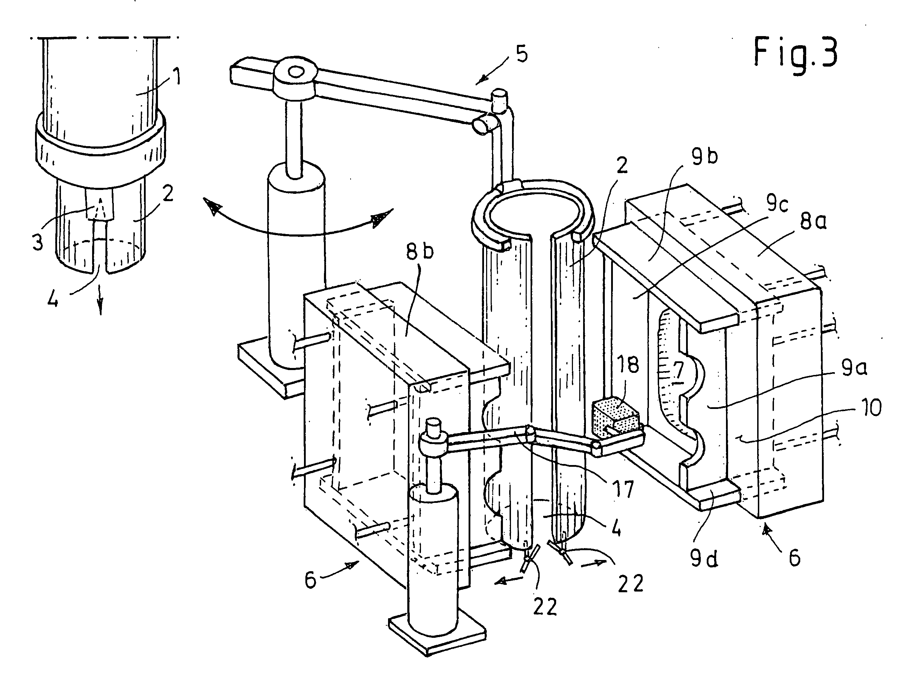

Bei dem dargestellten Ausführungsbeispiel ist vorgesehen, den Vorformlingschlauch 2 mittels eines Greifers 5 vom Extrusionskopf 1 abzunehmen und zu dem Blasformwerkzeug 6 zu verbringen, wie dies in Figur 3 schematisch veranschaulicht ist.

Der Greifer 5 ist in den Zeichnungen stark vereinfacht dargestellt. Dieser muss nicht notwendigerweise ein kreissegmentförmiges Greiferelement aufweisen, vielmehr kann dieser etwa auf einem Kreisbogen oder einem Vieleck angeordnete Greifersegmente mit zur Übernahme des Vorformlingschlauchs 2 vorgesehenen Saugnäpfen aufweisen. Ein solcher Greifer ist, wie eingangs bereits erwähnt, beispielsweise in der DE 102 55 24 beschrieben. Das Abnehmen des Vorformlingschlauchs 2 kann durch eine weitere Trennvorrichtung für den Vorformlingschlauch 2 unterstützt werden. Alternativ kann durch Verengung des Düsenspalts des Extrusionskopfs eine Dünnstelle im Vorformlingssschlauch 2 erzeugt werden, die ein Abreißen desselben mittels Greifer 5 ermöglicht.

Während der Manipulation des Vorformlingschlauchs 2 mit dem Greifer 5 kann der Vorformlingschlauch 2 in Umfangsrichtung bzw. radial aufgeweitet werden, um eine entsprechende Überlappung der Kavitäten 7 des Blasformwerkzeugs 6 zu erzielen. Zusätzlich wird der Vorformlingsschlauch an seinem in Schwerkraftrichtung unteren Ende in den an den Schlitz 4 angrenzenden Bereichen jeweils von einem Spreizelement 22 ergriffen und eingespannt gehalten. Die Spreizelemente 22 können beispielsweise als pneumatisch betätigbare Zangen ausgebildet sein, die im Sinne einer Ausbreitung des Vorformlingsschlauchs 2 relativ zueinander verfahrbar ausgebildet sein können.

In dem dargestellten Ausführungsbeispiel ist ein Einkavitätenwerkzeug gezeigt, d. h., dass die zueinander komplementären Kavitäten 7 der Blasformhälften 8a, 8b ein einziges Formnest bilden. Das Blasformwerkzeug 6 gemäß der Erfindung kann genauso gut als Mehrkavitätenwerkzeug ausgebildet sein.

Während der Greifer 5 den Vorformlingschlauch zwischen die geöffneten Blasformhälften 8a, 8b des Blasformwerkzeugs 6 verbringt, erfolgt zugleich eine Ausrichtung des Längsschlitzes 4 des Vorformlingschlauchs 2 derart, dass der Längsschlitz 4 mit der Teilungsebene 10 bzw. Trennebene des Blasformwerkzeugs zur Deckung gebracht wird, und zwar bei dem dargestellten Ausführungsbeispiel in Figur 3 in Richtung auf die dem Betrachter zugewandte Seite.

Jede der Blasformhälften 8a, 8b des Blasformwerkzeugs 6 ist mit Schiebern 9a, b, c, d versehen, die vorzugsweise hydraulisch aus der Teilungsebene des Blasformwerkzeugs 6 ausfahrbar und in diese einfahrbar ausgebildet sind. Diese Schieber 9a, b, c, d dienen während der Schließbewegung der Blasformhälften 8a, 8b als Formvoreiler und werden entsprechend nachstehend so bezeichnet.

Wie dies insbesondere aus Figur 3 ersichtlich ist, umrahmen die Formvoreiler 9a, b, c, d jeweils die Kavitäten 7 der Blasformhälften 8a, 8b, wobei aus Gründen einer vereinfachten Darstellung die in der Figur dargestellte Anordnung nicht der Kontur der Kavitäten 7 angepasst ist. Tatsächlich bestehen die Formvoreiler (Schieber) aus mehreren Segmenten 9a, b, c, d, die der Kontur der Kavitäten 7 jeweils angepasst sind, um so den Anfall an Butzen (Flash) möglichst klein zu halten. Die Formvoreiler können auch einteilig ausgebildet sein.

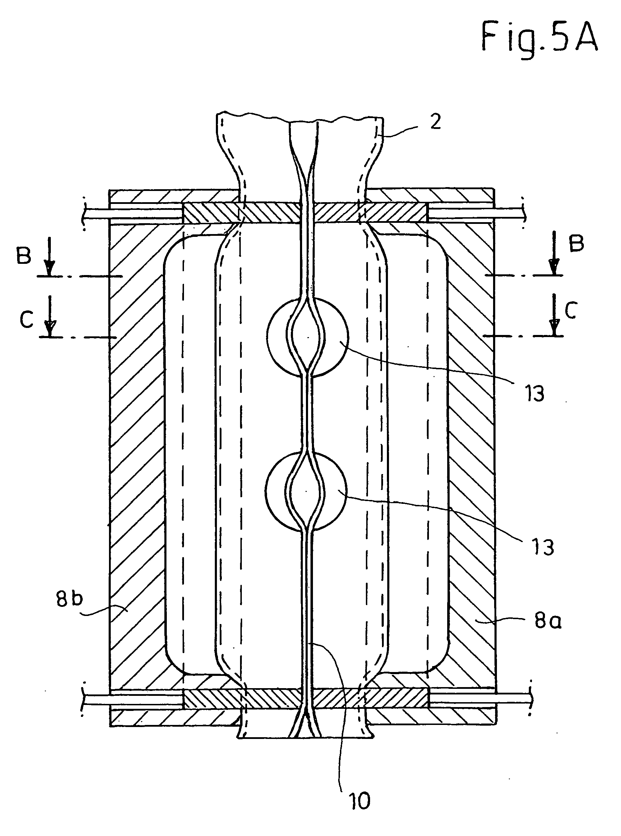

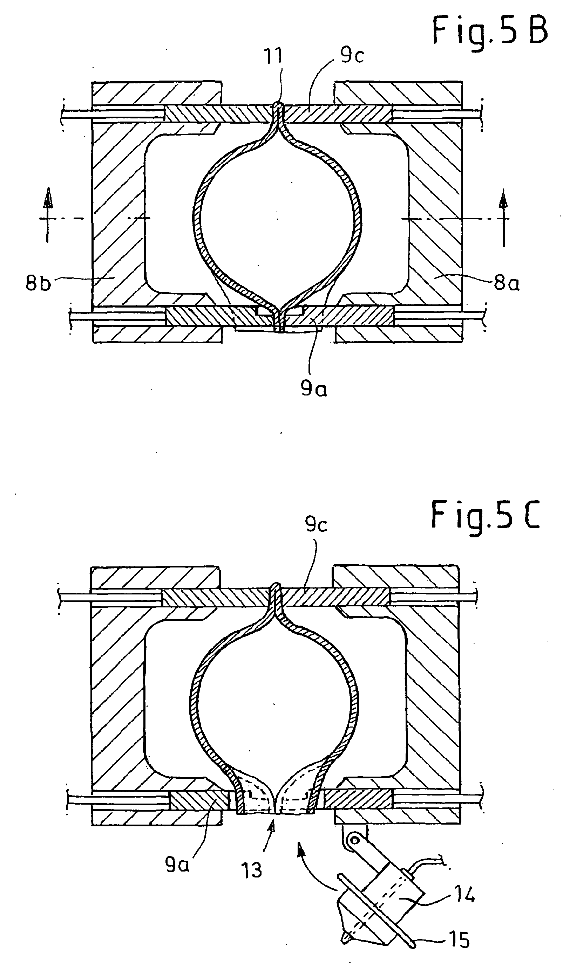

Nachdem der Vorformlingschlauch in die in Figur 3 gezeigte Stellung verbracht wurde und entsprechend ausgerichtet wurde, werden die Blasformhälften 8a, 8b des Blasformwerkzeugs 6 mit den aus der Teilungsebene 10 herausgefahrenen Formvoreilern 9a, b, c, d gegeneinander so verfahren, dass die Formvoreiler 9a, b, c, d die in den Figuren 5a und 5b gezeigte Lage einnehmen. Diese spannen den Vorformlingschlauch 3 umfänglich unter Bildung eines Butzens 11 zwischen sich ein. In dieser Lage sind die Blasformhälften 8a, 8b nicht vollständig geschlossen, sondern werden mittels der Formvoreiler 9a, b, c, d zueinander auf Abstand gehalten.

Auf einer der Stirnseite der Blasformhälften 8a, 8b, d. h. derjenigen Seiten, die sich quer zur Teilungsebene 10 des Blasformwerkzeugs 6 erstrecken, sind in den Formvoreilern 9a, b, c, d jeweils zueinander komplementäre Ausnehmungen 12 vorgesehen, sowie bei gegeneinander gefahrenen Voreilern 9a, b, c, d wie dies in Figur 5a dargestellt ist, jeweils Öffnungen 13 bilden, durch welche sich die Teilungsebene 10 der geschlossenen Blasformhälften 8a, 8b erstreckt. Diese Öffnungen sind jeweils bezüglich der (gedachten) Teilungsebene 10 symmetrisch angeordnet. Der Längsschlitz 4 des Vorformlingschlauchs 2 erstreckt sich ebenfalls idealerweise in der Teilungsebene 10 des Blasformwerkzeugs.

Nach dem Zusammenfahren der Formvoreiler 9a, b, c, d, beispielsweise durch die Schließbewegung der Blasformhälften 8a, b veranlasst (gezwungen), wird der Vorformlingschlauch unter Bildung des Butzens 11 nur außerhalb der Öffnung 13 zusammengequetscht. Im Bereich der Öffnungen 13 bleibt der Längsschlitz 4 des Vorformlingschlauchs 2 geöffnet.

In einem weiteren Verfahrensschritt, welcher in den Figuren 5b und 5c veranschaulicht ist, wird in die Öffnungen 13 jeweils ein an einer Blasformhälfte 8b angeschlagener Blasdorn 14 eingeführt. Die Blasdorne 14 haben jeweils entsprechend den Öffnungen einen etwa kreisrunden Querschnitt. Die Erfindung ist so zu verstehen, dass die Kontur der Öffnungen 13 sowie die Anzahl der Öffnungen 13 und die entsprechende Anzahl der Blasdorne 14 für die Erfindung nicht kritisch ist.

Bei dem dargestellten Ausführungsbeispiel sind die Blasdorne 14 schwenkbeweglich an eine Blasformhälfte 8b angeschlagen, die Erfindung ist so zu verstehen, dass die Blasdorne 14 auch an einer separaten Einrichtung vorgesehen sein können.

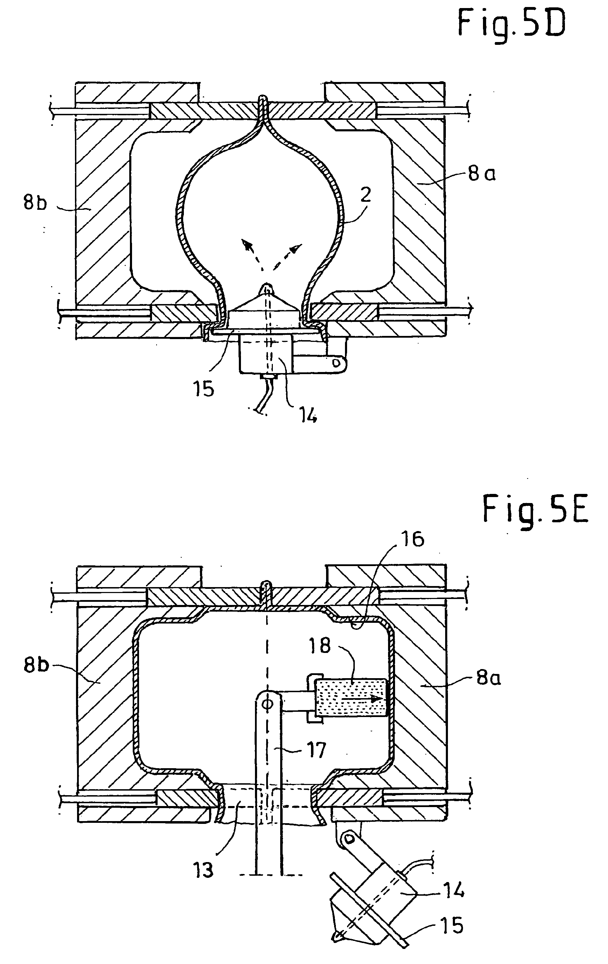

Wie insbesondere den Abbildungen 5c und 5d zu entnehmen ist, sind die Blasdorne 14 jeweils mit einem Dichtkragen 15 versehen, der diese im Bereich der Öffnungen 13 gegen die Formvoreiler 9a abdichtet.

In einem weiteren Verfahrensschritt, der in den Figuren 5d und 5e veranschaulicht ist, wird der Vorformlingschlauch gegen die Kavitäten 7 unter Einbringung von Blasluft angelegt und gegen diese ausgeformt. Nach Aufweitung und teilweise Ausformung des Vorformlingschlauchs 2 zu dem halbfertigen Artikel 16 können die Blasdorne 14 aus den Öffnungen 13 hinausgeschwenkt werden. Diese geben die Öffnungen 13 jeweils vollständig frei, so dass, wie dies in Figur 5e gezeigt ist, ein Manipulator 17 mit einem Einbauteil 18 in den halbfertigen Artikel 16 eingeführt werden kann.

Nachdem die Einbauteile 18 an die Wandung des halbfertigen Artikels 16 gefügt wurden, werden die Öffnungen 13 erneut mit den Blasdornen 14 verschlossen.

Sodann werden die Vorformlinge erneut blasdruckbeaufschlagt um eine etwaige Faltenbildung des Vorformlingschlauchs in dem an die Formvoreiler 9a,b,c,d angrenzenden Bereich zu verhindern oder dort etwa entstandene Falten glatt zu ziehen.

An dieser Stelle sei nochmals erwähnt, dass die Anzahl und Lage der Einbauteile sowie die Art der Einbauteile für die Erfindung nicht kritisch sind. Im vorliegenden Fall kann beispielsweise der Artikel ein Kraftstoffbehälter sein, in den ein Schwalltopf als Einbauteil eingebracht wird.

Bei dem in Figur 3 gezeigten Ausführungsbeispiel sind der Manipulator 17, der als dreiachsiger Roboterarm ausgebildet ist, und der ebenfalls dreiachsige Greifer 5 auf jeweils gegenüberliegenden Seiten des Blasformwerkzeugs 6 angeordnet. Diese können alternativ auf einer Seite des Blasformwerkzeugs 6 angeordnet sein.

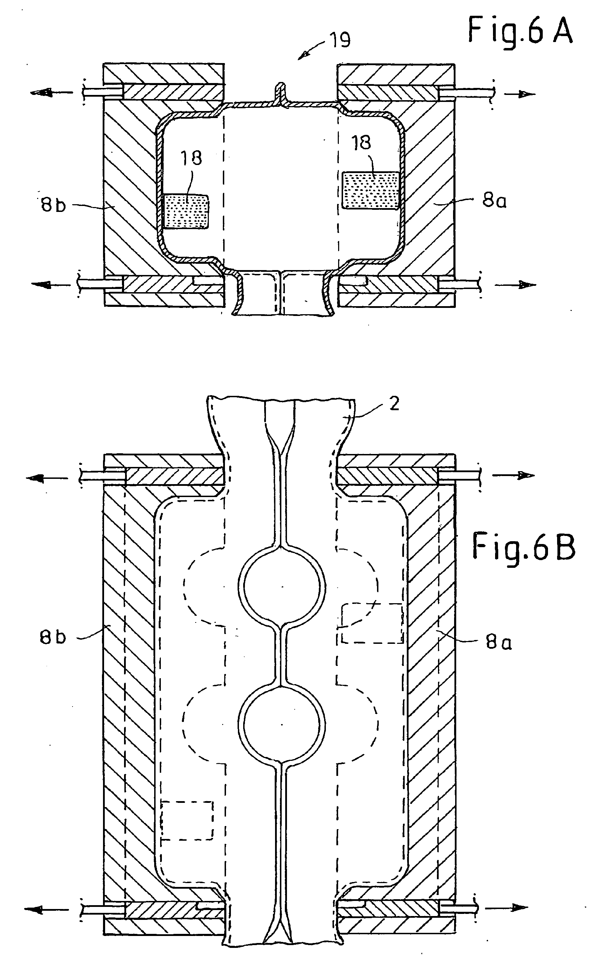

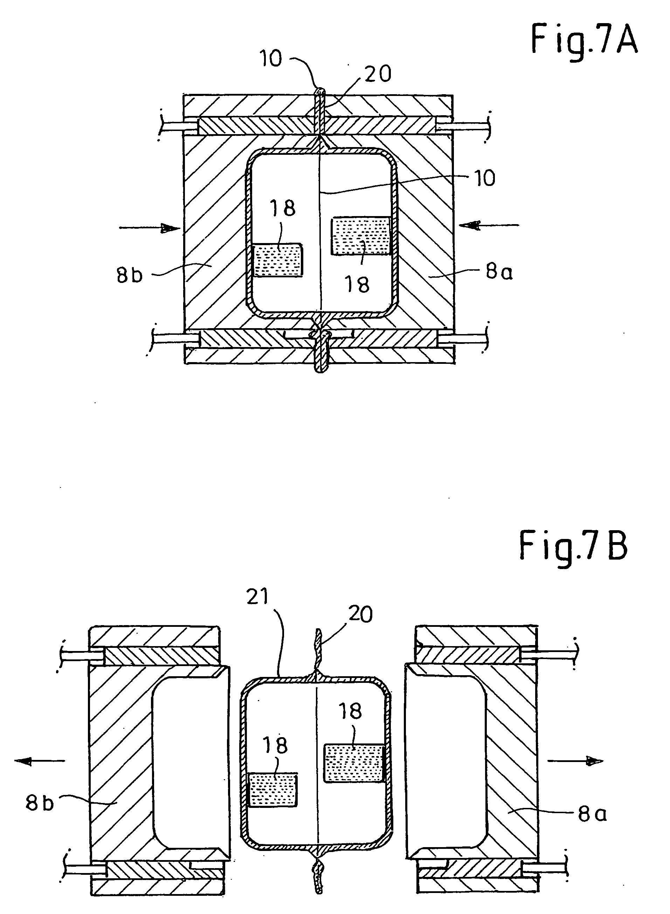

Nachdem das Einbauteil 18 in den halbfertigen Artikel 16 eingebracht wurde, gegebenenfalls die Blasdorne 14 erneut in die Öffnungen 13 eingeführt wurden und der Vorformlingschlauch 2 nachgeblasen wurde, werden die Formvoreiler 9a, b, c, d eingezogen (siehe Figur 6a) und die Blasformhälften 8a, b vollziehen eine Schließbewegung, bei welcher sich das über die Breite des Spalts 19 zwischen den Blasformhälften 8a, b erstreckende Wandungsmaterial des halbfertigen Artikels zu einem weiteren Butzen 20 zusammengequetscht wird. Aus Gründen einer vereinfachten Darstellung ist der Spalt 19 in den Zeichnungen übertrieben groß dargestellt. Der fertige Artikel erhält die in den Figuren 7a und 7b gezeigte Gestalt. Die Blasformhälften 8a, b öffnen sich bzw. werden in Richtung der in Figur 7b gezeigten Pfeile auseinander gefahren und der fertige Artikel 21 kann mittels einer Entnahmeeinrichtung entnommen werden. Selbstredend wird der Butzen 20 entfernt.

### Bezugszeichenliste

| | |
|---|---|
| 1 | Extrusionskopf |
| 2 | Vorformlingschlauch |
| 3 | Trenneinrichtung |
| 4 | Längsschlitz |
| 5 | Greifer |
| 6 | Blasformwerkzeug |
| 7 | Kavitäten |
| 8a, b | Blasformhälften |
| 9a, b, c, d | Schieber (Formvoreiler) |
| 10 | Teilungsebene |
| 11 | Butzen |
| 12 | Ausnehmungen |
| 13 | Öffnungen |
| 14 | Blasdorne |
| 15 | Dichtkragen |
| 16 | halbfertiger Artikel |
| 17 | Manipulator |
| 18 | Einbauteil |
| 19 | Spalt |
| 20 | Butzen |
| 21 | fertiger Artikel |
| 22 | Spreizelemente |

## Patentansprüche

1. Verfahren zur Herstellung eines Kunststoffartikels umfassend folgend Verfahrensschritte:
Extrudieren eines etwa schlauchförmigen Vorformlings (2),
Aufteilen des Schmelzestroms innerhalb des Extrusionskopfs (1) oder Auftrennen des aus dem Extrusionskopf (1) austretenden oder bereits ausgetretenen Extrudats derart, dass ein Vorformling mit einem etwa C-förmigen Querschnitt erhalten wird und
Umformen des Vorformlings innerhalb eines Blasformwerkzeugs (6) unter Anwendung von Differenzdruck zu einem Hohlkörper, **dadurch gekennzeichnet, dass** zunächst eine Aufweitung und teilweise Vorformung des Vorformlings bei teilweise geschlossenem Blasformwerkzeug (6) erfolgt,
in einem weiteren Schritt zwischen die Teile des nicht vollständig geschlossenen Blasformwerkzeugs (6) und durch die geöffnete Seite des Vorformlings wenigstens ein Einbauteil (18) in das Innere des teilweise vorgeformten Artikels eingebracht wird,
und in einem weiteren Schritt das Blasformwerkzeug (6) vollständig geschlossen wird, wobei der Artikel unter Bildung einer wenigstens teilweise umlaufenden Quetschnaht vollständig ausgeformt wird, wobei die Schließbewegung des Blasformwerkzeugs (6) zweistufig erfolgt, wobei in einer ersten Stufe der Schließbewegung wenigstens ein, vorzugsweise mehrere, die Kavitäten (7) der Blasformwerkzeuge (6) umrahmende Schieber als Formvoreiler (9a, b, c, d) den Vorformling unter Bildung wenigstens einer Öffnung zwischen sich einspannen.

2. Verfahren nach Anspruch 1, **dadurch gekennzeichnet, dass** die Trennnaht des Vorformlings zu der Trennebene des Blasformwerkzeugs ausgerichtet wird, derart, dass diese sich etwa in der gedachten Trennebene des Blasformwerkzeugs (6) erstreckt.

3. Verfahren nach einem der Ansprüche 1 oder 2, **dadurch gekennzeichnet, dass** zwischen der ersten Stufe und der zweiten Stufe der Schließbewegung zunächst eine Aufweitung des Vorformlings (2) in die Blasformhälften (8a, b) und in einem weiteren Schritt das Einbringen des Einbauteils (18) erfolgt.

4. Verfahren nach einem der Ansprüche 1 bis 3, **dadurch gekennzeichnet, dass** der Vorformling mittels Blasluft aufgeweitet wird, wobei wenigstens ein Blasdorn (14) in die von den Formvoreilern (9a, b, c, d) gebildete Öffnung (13) eingebracht wird.

5. Verfahren nach einem der Ansprüche 1 bis 4, **dadurch gekennzeichnet, dass** das Einbringen des Einbauteils (18) durch die von Formvoreilern gebildete Öffnung (13) erfolgt.

6. Verfahren nach einem der Ansprüche 1 bis 5, **dadurch gekennzeichnet, dass** der Vorformling mittels wenigstens eines Greifers (5) vom Extrusionskopf (1) abgenommen wird und zwischen die geöffneten Hälften des Blasformwerkzeugs (6) verbracht wird.

7. Verfahren nach einem der Ansprüche 1 bis 6, **dadurch gekennzeichnet, dass** der Vorformling vor oder während des Einbringens zwischen die geöffneten Blasformhälften (8a, b) in Umfangsrichtung aufgeweitet und/oder teilweise ausgebreitet wird.

8. Verfahren nach einem der Ansprüche 1 bis 7, **dadurch gekennzeichnet, dass** das Einbauteil (18) mittels eines vorzugsweise mehrachsigen Manipulators (17) in den teilweise ausgeformten Vorformling eingebracht wird.

9. Verfahren nach einem der Ansprüche 1 bis 8, **dadurch gekennzeichnet, dass** nach dem Einbringen des Einbauteils (18) in die von den Formvoreilern gebildete Öffnung erneut ein Blasdorn (14) eingebracht wird und der Vorformling erneut mit Blasluft beaufschlagt wird.

10. Blasformwerkzeug (6) zur Herstellung eines Kunststoffartikels (21) nach dem Verfahren nach einem der vorstehenden Ansprüche, umfassend wenigstens zwei ein Formnest bildende Blasformhälften (8a, b), die eine Öffnungs- und Schließbewegung relativ zueinander vollziehen, wobei wenigstens eine Blasformhälfte, vorzugsweise beide, mit einem wenigstens einen die jeweilige Kavität umrahmenden Schieber (9a, b, c, d) als Formvoreiler versehen ist, der mit wenigstens eine Ausnehmung zur Bildung einer Öffnung (13) zur Aufnahme eines Blasdorns (14) und zur Hindurchführung eines Manipulators (17) versehen ist.

11. Blasformwerkzeug nach Anspruch 10, **dadurch gekennzeichnet, dass** die Formvoreiler (9a, b, c, d) aus der Trennebene (10) der Blasformhälften ein- und ausfahrbar ausgebildet sind.

12. Blasformwerkzeug nach einem der Ansprüche 10 oder 11, **dadurch gekennzeichnet, dass** die Formvoreiler (9a, b, c, d) der Kontur der Kavitäten (7) angepasst sind.

13. Blasformwerkzeug nach einem der Ansprüche 10 bis 12, **dadurch gekennzeichnet, dass** wenigstens ein Formvoreiler (9a,b,c,d) temperierbar, insbesondere beheizbar ausgebildet ist.

14. Blasformwerkzeug nach einem der Ansprüche 10 bis 13, **dadurch gekennzeichnet, dass** wenigstens ein Formvoreiler (9a,b,c,d) mit Unterdruck beaufschlagten Ansaugöffnungen zur Fixierung des Vorformlings versehen ist.

## Claims

1. Method for producing a plastic article, said method comprising the following steps:
- extruding an approximately tube-shaped preform (2);
- dividing-up the melt flow inside the extrusion head (1) or severing the extrudate which is passing out, or has already passed out, of said extrusion head (1) in such a way that a preform with an approximately C-shaped cross-section is obtained; and
- re-forming the preform inside a blow-moulding tool (6), with the application of differential pressure, to form a hollow body, **characterised in that** an expansion and partial pre-forming of the preform takes place first, with the blow-moulding tool (6) partially closed;
- in a further step, at least one insert (18) is introduced into the interior of the partially preformed article between the parts of the blow-moulding tool (6), which is not completely closed, and through the open side of the preform;
- and in a further step, the blow-moulding tool (6) is completely closed, wherein the article is completely formed with the formation of an at least partially circumferential pinch-off seam, wherein the closing movement of the blow-moulding tool (6) takes place in two stages, wherein, in a first stage of the closing movement, at least one and preferably a number of slides in the form of leading portions (9a, b, c, d) of the mould that frame the cavities (7) of the blow-moulding tool (6), clamp the preform in between them, with the formation of at least one aperture.

2. Method according to claim 1, **characterised in that** the separating seam of the preform is aligned in relation to the separating plane of the blow-moulding tool in such a way that said seam extends approximately in the imaginary plane of separation of said blow-moulding tool (6).

3. Method according to either of claims 1 or 2, **characterised in that** an expansion of the preform (2) into the halves (8a, b) of the blow mould takes place first, between the first stage and the second stage of the closing movement, and the introduction of the insert (18) takes place in a further step.

4. Method according to one of claims 1 to 3, **characterised in that** the preform is expanded by means of blowing air, at least one blowing pin (14) being introduced into the aperture (13) formed by the leading portions (9a, b, c, d) of the mould.

5. Method according to one of claims 1 to 4, **characterised in that** the introduction of the insert (18) takes place through the aperture (13) formed by the leading portions of the mould.

6. Method according to one of claims 1 to 5, **characterised in that** the preform is removed from the extrusion head (1) by means of at least one gripper (5) and positioned between the open halves of the blow-moulding tool (6).

7. Method according to one of claims 1 to 6, **characterised in that** the preform is expanded and/or partially spread out in the peripheral direction before or during its introduction between the open halves (8a, b) of the blow mould.

8. Method according to one of claims 1 to 7, **characterised in that** the insert (18) is introduced, by means of a preferably multi-axial manipulator (17), into the preform which has been partly formed.

9. Method according to one of claims 1 to 8, **characterised in that**, after the insert (18) has been introduced into the aperture formed by the leading portions of the mould, a blowing pin (14) is introduced again and the preform is again acted upon by blowing air.

10. Blow-moulding tool (6) for producing a plastic article (21) by the method according to one of the preceding claims, said tool comprising at least two halves (8a, b) of a mould which form a mould cavity and which perform an opening and closing movement relative to one another, wherein at least one half, and preferably both halves, of the mould is/are provided with at least one slide (9a, b, c, d), which frames the respective cavity, in the form of a leading portion of the mould, which leading portion is provided with at least one clearance for forming an aperture (13) for receiving a blowing pin (14) and for passing a manipulator (17) through.

11. Blow-moulding tool according to claim 10, **characterised in that** the leading portions (9a, b, c, d) of the mould are constructed so as to be capable of being conveyed into and out of the plane of separation (10) of the halves of the blow mould.

12. Blow-moulding tool according to either of claims 10 or 11, **characterised in that** the leading portions (9a, b, c, d) of the mould are adapted to the contour of the cavities (7).

13. Blow-moulding tool according to one of claims 10 to 12, **characterised in that** at least one leading portion (9a, b, c, d) of the mould is constructed so as to be capable of being tempered, in particular capable of being heated.

14. Blow-moulding tool according to one of claims 10 to 13, **characterised in that** at least one leading portion (9a, b, c, d) of the mould is provided with induction apertures for fixing the preform which are acted upon by negative pressure.

## Revendications

1. Procédé de fabrication d'un objet en matière plastique, comportant les étapes suivantes :
- extrusion d'une paraison (2) sensiblement en forme de tuyau flexible,
- répartition du flux de matière en fusion à l'intérieur de la filière d'extrusion (1) ou sectionnement du produit extrudé sortant ou déjà sorti de la filière d'extrusion (1) pour obtenir une paraison avec une section transversale sensiblement en forme de C, et
- formage de la paraison à l'intérieur d'un moule de soufflage (6) moyennant l'application d'une pression différentielle pour obtenir un corps creux,
**caractérisé en ce que** l'on effectue d'abord un évasement et un pré-formage partiel de la paraison avec le moule de soufflage (6) partiellement fermé,
dans une autre étape, au moins un insert (18) est introduit à l'intérieur de l'objet partiellement préformé en passant entre les parties du moule de soufflage (6) non complètement fermé et par le côté ouvert de la paraison,
et dans une autre étape, on ferme complètement le moule de soufflage (6), l'objet étant intégralement moulé moyennant la formation d'une soudure par écrasement au moins partiellement périphérique, le mouvement de fermeture du moule de soufflage (6) étant réalisé en deux phases, dans une première phase du mouvement de fermeture, au moins un, de préférence plusieurs tiroirs en tant que dispositifs de glissement en avant (9a, b, c, d) entourant les cavités (7) du moule de soufflage (6) enserrent entre eux la paraison moyennant la formation d'au moins une ouverture.

2. Procédé selon la revendication 1, **caractérisé en ce que** le joint de séparation de la paraison est orienté par rapport au plan de joint du moule de soufflage de telle sorte que celui-ci s'étend sensiblement dans le plan de joint imaginaire du moule de soufflage (6).

3. Procédé selon la revendication 1 ou 2, **caractérisé en ce qu'**entre la première phase et la deuxième phase du mouvement de fermeture il se produit d'abord un évasement de la paraison (2) dans les demi-moules de soufflage (8a, b), puis, dans une autre étape, on introduit l'insert (18).

4. Procédé selon l'une quelconque des revendications 1 à 3, **caractérisé en ce que** la paraison est évasée au moyen de l'air de soufflage, au moins un mandrin de soufflage (14) étant introduit dans l'ouverture (13) formée par les dispositifs de glissement en avant (9a, b, c, d).

5. Procédé selon l'une quelconque des revendications 1 à 4, **caractérisé en ce que** l'insert (18) est introduit à travers l'ouverture (13) formée par les dispositifs de glissement en avant (9a, b, c, d).

6. Procédé selon l'une quelconque des revendications 1 à 5, **caractérisé en ce que** la paraison est enlevée de la filière d'extrusion (1) au moyen d'un élément de préhension (5) et est amenée entre les moitiés ouvertes du moule de soufflage (6).

7. Procédé selon l'une quelconque des revendications 1 à 6, **caractérisé en ce que** la paraison est évasée dans le sens périphérique et/ou partiellement élargie avant ou pendant l'introduction entre les demi-moules de soufflage (8a, b) ouverts.

8. Procédé selon l'une quelconque des revendications 1 à 7, **caractérisé en ce que** l'insert (18) est introduit dans la paraison partiellement moulée au moyen d'un manipulateur (17) de préférence à plusieurs axes.

9. Procédé selon l'une quelconque des revendications 1 à 8, **caractérisé en ce que**, après l'introduction de l'insert (18) dans l'ouverture formée par les dispositifs de glissement en avant, on introduit à nouveau un mandrin de soufflage (14) et la paraison est à nouveau sollicitée par l'air de soufflage.

10. Moule de soufflage (6) pour la fabrication d'un objet en matière plastique (21) selon le procédé selon l'une quelconque des revendications précédentes, comportant au moins deux demi-moules de soufflage (8a, b) formant une empreinte de moulage, qui effectuent l'un par rapport à l'autre un mouvement d'ouverture et de fermeture, au moins un demi-moule de soufflage, de préférence les deux, étant munis d'au moins un tiroir (9a, b, c, d) en tant que dispositif de glissement en avant, lequel entoure la cavité respective et est muni d'au moins un évidement destiné à former une ouverture (13) pour recevoir un mandrin de soufflage (14) et pour laisser passer un manipulateur (17).

11. Moule de soufflage selon la revendication 10, **caractérisé en ce que** les dispositifs de glissement en avant (9a, b, c, d) sont réalisés de manière à pouvoir entrer et sortir du plan de joint (10) des demi-moules de soufflage.

12. Moule de soufflage selon la revendication 10 ou 11, **caractérisé en ce que** les dispositifs de glissement en avant (9a, b, c, d) sont ajustés au contour des cavités (7).

13. Moule de soufflage selon l'une quelconque des revendications 10 à 12, **caractérisé en ce qu'**au moins un dispositif de glissement en avant (9a, b, c, d) est réalisé de manière à pouvoir être régulé en température, en particulier de manière à pouvoir être chauffé.

14. Moule de soufflage selon l'une quelconque des revendications 10 à 13, **caractérisé en ce qu'**au moins un dispositif de glissement en avant (9a, b, c, d) comporte des orifices d'aspiration sollicités par une dépression en vue de la fixation de la paraison.
